# EUROPÄISCHE PATENTSCHRIFT

(11) **EP 2 473 339 B1**
(45) Veröffentlichungstag und Bekanntmachung des Hinweises auf die Patenterteilung: **15.05.2013**
(21) Anmeldenummer: 10747197.1
(22) Anmeldetag: 25.08.2010
(51) Int. Cl.: B29D 30/06, B29C 33/04, B29C 35/04

(54) **VERFAHREN ZUM VULKANISIEREN VON FAHRZEUGREIFEN MIT EINER HEIZPRESSE**
METHOD FOR VULCANISING VEHICLE TIRES IN A HEATING PRESS
PROCEDE DE VULCANISATION DE PNEUMATIQUES DU VEHICULE DANS UNE PRESSE CHAUFFEE

(30) Priorität: 03.09.2009 DE 102009043940
(43) Veröffentlichungstag der Anmeldung: 11.07.2012
(73) Patentinhaber: Continental Reifen Deutschland GmbH, 30165 Hannover (DE)
(72) Erfinder: FRICKE, Bernd, 31319 Sehnde (DE); KOVAC, Milos, 02001 Puchov (SK)
(74) Vertreter: Finger, Karsten
(86) Internationale Anmeldenummer: PCT/EP2010/062361
(87) Internationale Veröffentlichungsnummer: WO 2011/026762

(56) Entgegenhaltungen:
- EP-A2- 0 323 164
- WO-A1-2009/031493
- JP-A- 4 014 413

## Beschreibung

Die Erfindung betrifft ein Verfahren zum Vulkanisieren von Fahrzeugreifen mit einer Heizpresse.

Die Reifenvulkanisation erfolgt in Heizpressen, bei der der Reifenrohling in geeignete Formsegmente eingesetzt und unter Einwirkung von Wärme sowie Druck vulkanisiert wird. Auf der Reifeninnenseite wird ein flexibler Balg an den Reifen angelegt, der mit einem dampfförmigen Heizmedium beaufschlagt wird und auf diese Weise dem Reifenrohling von der Innenseite die notwendige Vulkanisationsenergie zuführt. Die Zuführung der Vulkanisationsenergie über die Reifeninnenseite wird als Innenheizung bezeichnet. Die erforderlichen Vulkanisationstemperaturen und die Vulkanisationsdauer sind von verschiedenen Parametern abhängig, z.B. von dem Reifentyp.

Ein Problem bei der Reifenvulkanisation besteht darin, dass über die Höhe im Balginneren Temperaturdifferenzen auftreten. Die unteren Bereiche des Reifens werden dadurch stärker erwärmt als die oberen Bereiche des Fahrzeugreifens. Die höhere Temperatur in der unteren Reifenhälfte führt insbesondere zu einer Heizzeitreduzierung. Außerdem können die Temperaturdifferenzen über die Höhe im Balginneren die Qualität der zu fertigenden Fahrzeugreifen negativ beeinflussen.

In der JP 4014413A, EP 0323164A2 und WO 2009/031493 A1 sind herkömmliche Verfahren zur Vulkanisation von Fahrzeugreifen offenbart.

Der Erfindung liegt die Aufgabe zugrunde, ein Verfahren zum Vulkanisieren von Fahrzeugreifen bereitzustellen, bei dem Fahrzeugreifen mit einer hohen Fertigungsqualität hergestellt werden.

Gelöst wird die Aufgabe gemäß Anspruch 1.

Ein Vorteil der Erfindung ist insbesondere darin zu sehen, dass durch das erfindungsgemäße Verfahren eine unerwünschte Temperaturschichtung im Innenraum des Heizbalges wesentlich vermieden wird. Durch die pulsierende Stickstoffzufuhr in den Innenraum des Heizbalges wird die Bildung der Temperaturschichtung permanent gestört. Dadurch kommt es immer wieder zu einer homogenen Vermischung des Heizmediums im Heizbalg. Der pulsierende bzw. getaktete Stickstoffeinlass wird über das Stickstoffventil realisiert, indem dieses Ventil immer wieder kurzzeitig geschlossen und wieder geöffnet wird. Nach dem Schließen des Stickstoffventils sinkt der Balginnendruck kurzfristig durch natürliche Kondensation. Wird anschließend das Stickstoffventil wieder geöffnet, so strömt Stickstoff mit einer erhöhten Strömungsgeschwindigkeit in den Innenraum des Balges und führt dort zu einer homogenen Vermischung des Heizmediums im Heizbalg. Der stetige Impuls durch den pulsierenden Stickstoffeintrag stört somit permanent die Schichtenbildung im Heizbalg und führt somit zu einer gleichmäßigeren homogenen Temperaturverteilung. Auf diese Weise wird eine Verkürzung der Vulkanisationszeit erreicht und außerdem die Fertiungsqualität der herzustellenden Fahrzeugreifen gesteigert.

Gemäß der Erfindung ist vorgesehen, dass der pulsierende Stickstoffeintrag in den Heizbalg in Form eines sägezahnförmigen Druckverlaufes erfolgt. Der sägezahnförmige Druckverlauf hat einen positiven Einfluss auf die Durchmischung des Heizmediums im Heizbalg.

In einer vorteilhaften Weiterbildung der Erfindung ist vorgesehen, dass der pulsierende Stickstoffeintrag dadurch erfolgt, dass nach einem detektierten Druckabfall im Heizbalg von ca. 0,5 bis ca. 1 bar das Ventil der Stickstoffzuleitung wieder geöffnet wird und der Innendruck anschließend wieder auf den vorgegebenen Sollwert ansteigt. Auf diese Weise wird effektiv ein pulsierender bzw. getakteter Druckverlauf im Heizbalg realisiert, der effektiv die Temperaturschichtung im Heizbalg reduziert.

In einer weiteren vorteilhaften Weiterbildung der Erfindung ist vorgesehen, dass der pulsierende Stickstoffeintrag in den Heizbalg bis zum Ende der Vulkanisationszeit des Reifenrohlings erfolgt. Dadurch wird die Temperaturschichtung im Heizbalg über die gesamte Vulkanisationszeit reduziert.

In einer weiteren vorteilhaften Weiterbildung der Erfindung ist vorgesehen, dass die Stickstoffzuleitung und die Dampfzuleitung parallel zueinander angeordnet sind und in eine gemeinsame Leitung zum Heizbalg münden. Dadurch lässt sich auf einfache Weise ein pulsierender Stickstoffeintrag in den Heizbalg realisieren.

In einer weiteren vorteilhaften Weiterbildung der Erfindung ist vorgesehen, dass der Dampf bei Schritt b) einen Dampfdruck im Bereich zwischen 15 und 18 bar aufweist. Bei diesen Dampfdruckwerten lässt sich ein optimaler Energieeintrag erzielen.

In einer weiteren vorteilhaften Weiterbildung der Erfindung ist vorgesehen, dass der Stickstoff einen vorgegebenen Druckwert im Bereich zwischen 20 und 30 bar aufweist. Bei diesen Druckwerten erfolgt ein optimaler Energieeintrag über das Heizmedium.

Anhand eines Ausführungsbeispieles soll die Erfindung näher erläutert werden. Es zeigen:
- Fig. 1: Eine Heizpresse mit einem Reifenrohling
- Fig. 2: eine Dampfdruckkurve bei Einsatz des erfindungsgemäßen Verfahrens
- Fig. 3: eine herkömmliche Dampfdruckkurve

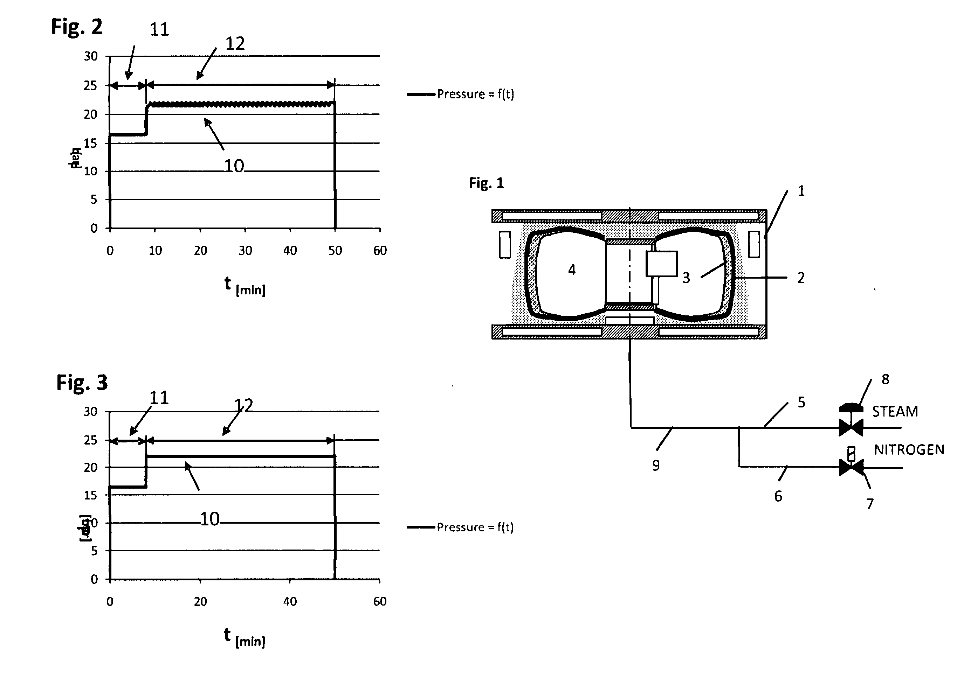

Fig. 1 zeigt eine Heizpresse 1 mit einem Reifenrohling 2. Auf der Innenseite des Reifenrohlings 2 ist der Heizbalg 3 angeordnet und in den Innenraum 4 wird das Heizmedium eingeleitet, mit dem die Heizenergie von der Innenseite zugeführt wird. Die Dampfzufuhr in den Balghohlraum 4 erfolgt über die Dampfzuleitung 5. Die Dampfzufuhr lässt sich über das Ventil 8 der Dampfzuleitung 5 steuern. Die Stickstoffzufuhr erfolgt über die Stickstoffzuleitung 6 mit dem Ventil 7. Durch ein getaktetes Öffnen und Schließen des Ventils 7 der Stickstoffzuleitung wird ein pulsierender bzw. getakteter Stickstoffeintrag in den Heizbalg 3 realisiert. Die Dampfzuleitung und die Stickstoffzuleitung sind parallel zueinander angeordnet und münden in eine gemeinsame Zuleitung 9, die in den Heizbalg 3 mündet. Bei einem Dampf-Stickstoff-Innenheizverfahren wird die zur Vulkanisation erforderliche Energie im Wesentlichen über eine Dampfphase eingebracht, die als erstes in den Balginnenraum einströmt. Nach einer bestimmten Zeit, die zwischen 5 und 10 Minuten beträgt, wird die Dampfversorgung über das Ventil 8 gestoppt. Anschließend wird der Innendruck mit einem Stickstoffeintrag über die Stickstoffzuleitung 6 angehoben und im Anschluss im Wesentlichen konstant gehalten. Durch den getakteten bzw. pulsierenden Stickstoffeinlass über das Ventil 7 wird die Bildung einer Temperaturschichtung im Heizbalg 3 erheblich reduziert. Der getaktete bzw. pulsierende Stickstoffeinlass wird über ein kurzzeitiges Schließen und Öffnen des Ventils 7 erreicht. Wenn das Ventil 7 in der Stickstoffzuleitung geschlossen wird, sinkt der Balginnendruck. Nach dem Erreichen eines Schwellwertes wird das Ventil 7 wieder geöffnet, so dass Stickstoff mit einer erhöhten Strömungsgeschwindigkeit in das Balginnere strömt. Dieser stetige Impuls durch den pulsierenden Stickstoffeintrag stört die Schichtenbildung im Balghohlraum 4 und führt dadurch zu einer gleichmäßigen Temperaturverteilung.

Fig. 2 zeigt den Druckverlauf 10 im Heizbalg beim Einsatz des erfindungsgemäßen Verfahrens. Auf der Abszisse ist die Vulkanisationszeit t in Minuten aufgetragen. Auf der Ordinate ist der Druckwert p im Heizbalg in bar aufgetragen. In der Vulkanisationszeit 11 wird ausschließlich mit einer Dampfphase zwischen 15 und 18 bar, vorzugsweise 16,5 bar, geheizt. Nach etwa 5 bis 10 Minuten wird die Dampfversorgung gestoppt und der Innendruck mittels Stickstoffzufuhr auf ein Druckniveau zwischen 20 und 24 bar , vorzugsweise 22 bar, angehoben. In der Vulkanisationszeit 12 erfolgt der erfindungsgemäße pulsierende Stickstoffeintrag, der über ein Öffnen und Schließen des Ventils in der Stickstoffzuleitung erreicht wird. Dadurch ergibt sich ein in Fig. 2 dargestellter schwingungsförmiger Druckverlauf, der die Temperaturschichtung im Heizbalg wesentlich reduziert. Der Druckverlauf ist im Wesentlichen sägezahnförmig.

Nach einem detektierten Druckabfall im Heizbalg von ca. 0,5 bis ca. 1 bar wird das Ventil der Stickstoffzuleitung wieder geöffnet, so dass der Innendruck anschließend wieder auf den vorgegebenen Sollwert von ca. 22 bar ansteigt. Ein derartiger pulsierender Stickstoffeintrag lässt sich über eine angeschlossene Computersteuerung realisieren, die automatisch ein Öffnen und Schließen des Ventils in er Dampfzuleitung steuert. Durch das erfindungsgemäße Verfahren wird die Vulkanisationszeit verkürzt und gleichzeitig werden Fahrzeugreifen mit einer hohen Fertigungsqualität hergestellt.

Fig. 3 zeigt eine herkömmliche Dampfdruckkurve 10, wie sie aus dem Stand der Technik bekannt ist, wobei kein pulsierender Stickstoffeintrag erfolgt.

### Bezugszeichenliste

### (ist Teil der Beschreibung)

| | |
|---|---|
| 1 | Heizpresse |
| 2 | Reifenrohling |
| 3 | Heizbalg |
| 4 | Balghohlraum |
| 5 | Dampfzuleitung |
| 6 | Stickstoffzuleitung |
| 7 | Ventil der Stickstoffzuleitung |
| 8 | Ventil der Dampfzuleitung |
| 9 | gemeinsame Zuleitung |
| 10 | Druckverlauf im Heizbalg |
| 11 | Vulkanisationszeit, in der nur mit Dampf geheizt wird |
| 12 | Vulkanisationszeit, in der Stickstoff hinzugegeben wird |

| | |
|---|---|
| p | Druck im Heizbalg |
| t | Vulkanisationszeit in Minuten |

## Patentansprüche

1. Verfahren zum Vulkanisieren von Fahrzeugreifen mit einer Heizpresse (1) und einem Heizbalg (3) mit folgenden Schritten,
a) Anordnung eines Reifenrohlings (2) in der Heizpresse (1)
b) Zuführung von Dampf in den Heizbalg (3)
c) Stoppen der Dampfversorgung zum Heizbalg (3)
d) Anheben des Innendruckes im Heizbalg (3) auf einen vorgegebenen Sollwert durch eine Zuführung von Stickstoff über eine Stickstoffzuleitung (6),
e) konstantes Halten des Innendruckes auf den vorgegebenen Sollwert,
wobei zumindest temporär über eine bestimmte Zeit ein pulsierender Stickstoffeintrag in den Heizbalg (3) über ein kurzzeitiges Öffnen und Schließen eines Ventils (7) in der Stickstoffzuleitung (6) erfolgt, wodurch eine Temperaturschichtung des Heizmediums im Heizbalg (3) erheblich reduziert wird,
wobei der pulsierende Stickstoffeintrag in den Heizbalg (3) in Form eines sägezahnförmigen Druckverlaufes erfolgt,
f) Ausvulkanisierung des Reifenrohlings (2) und Entnahme des Fahrzeugreifens aus der Heizpresse (1).

2. Verfahren nach Anspruch 1,
**dadurch gekennzeichnet, dass**
der pulsierende Stickstoffeintrag dadurch erfolgt, dass nach einem detektierten Druckabfall im Heizbalg (3) von ca. 0,5 bis ca. 1 bar das Ventil (7) der Stickstoffzuleitung wieder geöffnet wird und der Innendruck anschließend wieder auf den vorgegebenen Sollwert ansteigt.

3. Verfahren nach einem der vorhergehenden Ansprüche,
**dadurch gekennzeichnet, dass**
der pulsierende Stickstoffeintrag in den Heizbalg (3) bis zum Ende der Vulkanisationszeit des Reifenrohlings(2) erfolgt.

4. Verfahren nach einem der vorhergehenden Ansprüche,
**dadurch gekennzeichnet, dass**
die Stickstoffzuleitung (6) und die Dampfzuleitung (5) parallel zueinander angeordnet sind und in eine gemeinsame Leitung (9) zum Heizbalg (3) münden.

5. Verfahren nach einem der vorhergehenden Ansprüche,
**dadurch gekennzeichnet, dass**
der Dampf bei Schritt b) einen Dampfdruck im Bereich zwischen 15 und 18 bar aufweist.

6. Verfahren nach einem der vorhergehenden Ansprüche,
**dadurch gekennzeichnet, dass**
der Stickstoff einen vorgegebenen Druckwert im Bereich zwischen 20 und 30 bar aufweist.

## Claims

1. Method for vulcanizing vehicle tires using a heating press (1) and a heating bladder (3), with the following steps,
a) arranging a tire blank (2) in the heating press (1)
b) feeding steam into the heating bladder (3)
c) stopping the supply of steam to the heating bladder (3)
d) raising the internal pressure in the heating bladder (3) to a predetermined setpoint value by feeding nitrogen by way of a nitrogen supply line (6),
e) keeping the internal pressure constantly at the predetermined setpoint value,
a pulsating input of nitrogen into the heating bladder (3) taking place at least temporarily over a specific time by way of opening and closing a valve (7) in the nitrogen supply line (6) for a short time, whereby a temperature stratification of the heating medium in the heating bladder (3) is considerably reduced,
the pulsing input of nitrogen into the heating bladder (3) taking place in the form of a sawtooth-shaped pressure profile,
f) completely vulcanizing the tire blank (2) and removing the vehicle tire from the heating press (1).

2. Method according to Claim 1, **characterized in that** the pulsating input of nitrogen takes place by the valve (7) of the nitrogen supply line being opened again after a detected pressure drop in the heating bladder (3) of about 0.5 to about 1 bar, and the internal pressure subsequently rising again to the predetermined setpoint value.

3. Method according to one of the preceding claims, **characterized in that** the pulsating input of nitrogen into the heating bladder (3) takes place until the end of the vulcanizing time of the tire blank (2).

4. Method according to one of the preceding claims, **characterized in that** the nitrogen supply line (6) and the steam supply line (5) are arranged parallel to one another and open out into a common line (9) to the heating bladder (3).

5. Method according to one of the preceding claims, **characterized in that** the steam in step b) has a steam pressure in the range between 15 and 18 bar.

6. Method according to one of the preceding claims, **characterized in that** the nitrogen has a predetermined pressure value in the range between 20 and 30 bar.

## Revendications

1. Procédé de vulcanisation de bandages de roue de véhicule à l'aide d'une presse chauffante (1) et d'un soufflet chauffant (3), le procédé présentant les étapes suivantes :
a) placement d'une ébauche (2) de bandage de roue dans la presse chauffante (1),
b) apport de vapeur d'eau dans le soufflet chauffant (3),
c) interruption de l'apport de vapeur d'eau au soufflet chauffant (3),
d) relèvement de la pression interne qui règne dans le soufflet chauffant (3) à une valeur de consigne prédéterminée par apport d'azote à l'aide d'un conduit (6) d'amenée d'azote,
e) maintien constant de la pression interne à la valeur de consigne prédéterminée,
un apport pulsé d'azote dans le soufflet chauffant (3) ayant lieu au moins temporairement pendant une durée définie par ouverture et fermeture de courte durée d'une soupape (7) prévue dans le conduit (6) d'amenée d'azote, ce qui réduit considérablement la stratification de température du fluide chauffant présent dans le soufflet chauffant (3),
l'apport pulsé d'azote dans le soufflet chauffant (3) s'effectuant sous la forme d'une évolution de la pression en dents de scie,
f) vulcanisation finale de l'ébauche (2) de bandage de roue et enlèvement du bandage de roue de véhicule hors de la presse chauffante (1).

2. Procédé selon la revendication 1, **caractérisé en ce que** l'apport pulsé d'azote s'effectue en ouvrant la soupape (7) du conduit d'amenée d'azote après détection d'une chute de pression d'environ 0,5 à environ 1 bar dans le soufflet chauffant (3) et **en ce que** la pression interne remonte ensuite à la valeur de consigne prédéterminée.

3. Procédé selon l'une des revendications précédentes, **caractérisé en ce que** l'apport pulsé d'azote dans le soufflet chauffant (3) s'effectue jusqu'à la fin de la durée de vulcanisation de l'ébauche (2) de bandage de roue.

4. Procédé selon l'une des revendications précédentes, **caractérisé en ce que** le conduit (6) d'amenée d'azote et le conduit (5) d'amenée de vapeur d'eau sont disposés parallèlement l'un à l'autre et débouchent dans un conduit commun (9) qui aboutit dans le soufflet chauffant (3).

5. Procédé selon l'une des revendications précédentes, **caractérisé en ce qu'**à l'étape b), la vapeur d'eau présente une pression comprise dans la plage de 15 à 18 bars.

6. Procédé selon l'une des revendications précédentes, **caractérisé en ce que** l'azote présente une valeur prédéterminée de pression comprise entre 20 et 30 bars.
